# EUROPEAN PATENT SPECIFICATION

(11) **EP 1 263 174 B1**
(45) Date of publication and mention of the grant of the patent: **03.08.2005**
(21) Application number: 02011350.2
(22) Date of filing: 23.05.2002
(51) Int. Cl.: H04L 12/56

(54) **Information communication apparatus and information communication method**
Informations-Kommunikationsgerät und Verfahren zur Informationskommunikation
Appareil de communication d'informations et méthode de communication d'informations

(30) Priority: 30.05.2001 JP 2001162039
(43) Date of publication of application: 04.12.2002
(73) Proprietor: Pioneer Corporation, Tokyo-to (JP)
(72) Inventor: Yasushi, Mitsuo c/o Pioneer Corporation, Tsurugashima-shi, Saitama-ken (JP); Yanagidaira, Masatoshi c/o Pioneer Corporation, Tsurugashima-shi, Saitama-ken (JP); Tabata, Toshio c/o Pioneer Corporation, Tsurugashima-shi, Saitama-ken (JP)
(74) Representative: Grünecker, Kinkeldey, Stockmair & Schwanhäusser Anwaltssozietät

(56) References cited:
- WO-A-00/30529
- WO-A-01/25985
- "SPECIFICATION OF THE BLUETOOTH SYSTEM - V1.0B" PROFILES, [Online] 1 December 1999 (1999-12-01), page 1;61;66-71;329;334-343;355;364-369 XP002247521 Retrieved from the Internet: <URL:www.bluetooth.org> [retrieved on 2003-07-14]

## Description

### BACKGROUND OF THE INVENTION

### Field of the Invention:

The present invention relates to an information communication apparatus capable of data communication by radio communication method and in particular, to a communication method capable of protecting privacy at an information communication terminal.

### Description of the Invention:

Recently, a short-distance radio communication method called Bluetooth is used as a test to share, for example, home electric apparatuses (such as television and refrigerator), a printer, a cellular telephone, PDA (personal digital assistant), a personal computer, application server on a. network, thereby realizing an intelligent mechanism. Here, Bluetooth is a name of the short-distance radio communication technique specification standardized by Japan and Europe since May, 1998. This Bluetooth constitutes a short distance radio communication network with the maximum data transfer rate of about 1 Mbps and the maximum transfer distance of about 10 meters. By setting 79 channels of band width 1 MHz in the ISM (industrial scientific medical) frequency band of 2.4 GHz that can be used without permission, and by using frequency hopping type spectrum dispersion technique for switching a channel 1600 times for one second, thereby passing radio waves between electronic apparatuses.

The slave-master method is applied to the electronic apparatuses using the Bluetooth (hereinafter, referred to as BT apparatus) and according to the processing content, the BT apparatuses are divided to a master apparatus which determines the frequency hopping pattern and a slave apparatus controlled by the master apparatus. The master apparatus can simultaneously communicate with seven slave apparatuses. For example, when the master apparatus recognizes a slave apparatus existing within a radius of 10 m, exchanges ID numbers with it, generates a random number, and generates a link key (cipher key) between the master and slave apparatuses, thereby performing an authorizing processing. This authorizing processing establishes a connection between the master-slave apparatuses for automatically passing information to each other. Moreover, once authorization processing is performed between a master apparatus and a slave apparatus, after this, the master and the slave are automatically connected according to the link key without performing the authorization processing and data communication is enabled. The information content transmitted and received between the master-slave apparatuses is predetermined by the BT apparatuses.

By using the short-distance radio communication method such as Bluetooth, it is possible to automatically pass information between various electronic apparatuses. However, there arises a problem of privacy leak.

### SUMMARY OF THE INVENTION

It is therefore an object of the present invention to provide an information communication apparatus and an information communication method capable of transmitting information according to an object and preventing transmission of unnecessary information.

The above object of the present invention is solved by the invention as claimed in the independent claims. Preferred embodiments of the invention are defined by the dependent claims.

The "specification of the Bluetooth System" (specification volume 2 v1.0B) discloses in the "Service Discovery Application Profile" that services that are available on a device in the vicinity of a Bluetooth enable device are located. A link key for a device authorization and data encryption is created.

WO00/30529 discloses a worldwide patient location and data telemetry system for implantable medical devices for monitoring device functions, altering device operating parameters, and the provision of emergency assistance to a patient and communications with a patient. This system includes an implanted device, an external patient communications control device, a telemetry transceiver and a remote medical support network including a global positioning satellite receiver. The patient can initiate personal communication with the medical support network.

### SUMMARY OF THE INVENTION

It is therefore an object of the present invention to provide an information communication apparatus and an information communication method capable of transmitting information according to an object and preventing transmission of unnecessary information.

The above object of the present invention is solved by the invention as claimed in the independent claims. Preferred embodiments of the invention are defined by the dependent claims.

### BRIEF DESCRIPTION OF THE DRAWINGS

FIG. 1 shows a block diagram of a wrist band sensor 1 according to the present embodiment.
FIG. 2A shows a format of a table of connection conditions and history set for one BT apparatus.
FIG. 2B shows a table after various connection conditions have been set.
FIG. 3 shows correspondence between the publication range and the information contents.
FIG. 4 shows an external view of a wrist band sensor 1.
FIG. 5 shows the write band sensor 1 communicating with various BT apparatuses.
FIG. 6 is a flowchart showing connection of the system controller 10 of the wrist band sensor 1 during radio communication.
FIG. 7A is a flowchart showing a connection condition setting processing of the BT apparatus.
FIG. 7B is a flowchart showing connection condition setting processing in step S5 of FIG. 6.
FIGs. 8A to 8D shows connection condition examples displayed on a display 18a of a display/operation device 18.
FIG. 9A is a flowchart showing data communication processing of a system controller 10 of the wrist band sensor 1.
FIG. 9B is a flowchart showing the data communication processing of the BT apparatus at that time.
FIG. 10A is a flowchart showing an urgent processing in step S32 of FIG. 9A.
FIG. 10B is a flowchart showing an urgent process in step S62 of FIG. 9B.

### DETAILED DESCRIPTION OF PREFERRED EMBODIMENTS

Description will now be directed to preferred embodiments of the present invention with reference to the attached drawings. It should be noted that, explanation below is on an embodiment when the information communication apparatus of the present invention is applied to a wrist band sensor.

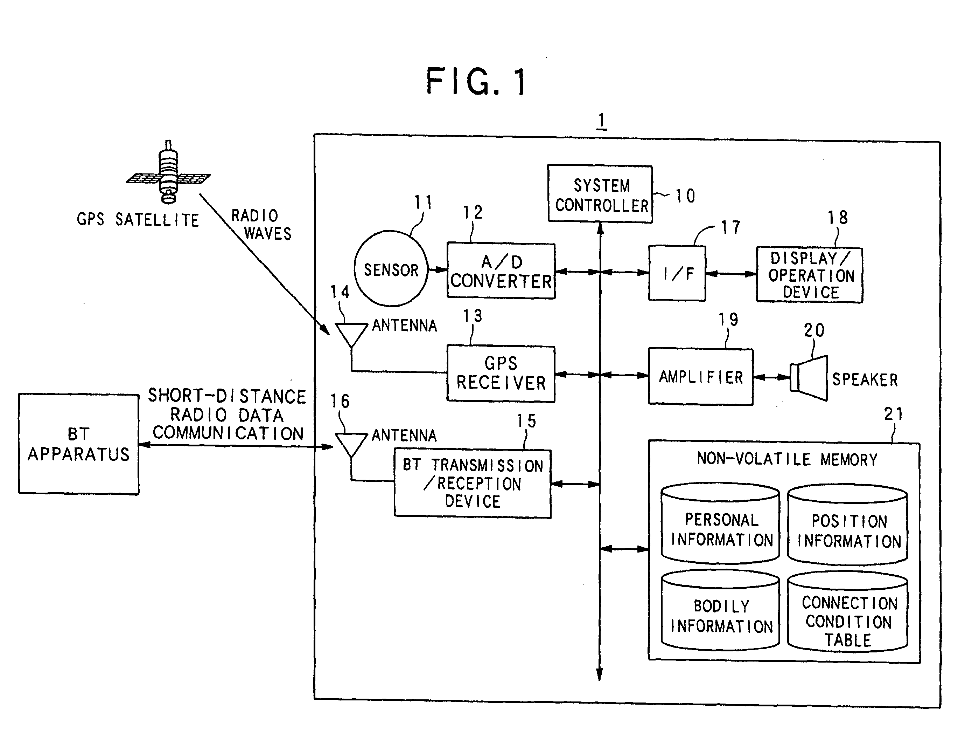

FIG. 1 shows a block diagram of the wrist band sensor 1 according to an embodiment of the present invention. As shown here, the wrist band sensor 1 includes a system controller 10 as a setting device (having a publication range setting device), a determining device, a control device, a transmission device, and a notifying device of the present invention, a sensor 11, GPS (global positioning systems) receiver 13, BT (Bluetooth) transmission/reception device 15 as a communication device of the present invention, display/operation device 18 as an input device of the present invention, a speaker 20, a non-volatile memory 21 as a memory of the present invention, and the like and is mainly mounted on a user's wrist.

The system controller 10 includes a CPU having calculation function, an oscillation circuit, ROM for storing a program controlling various operations and data, RAM as a work area, and the like, and controls the operations in the wrist band sensor 1 as a whole and also has a clock function. The sensor 11 has known functions for detecting bodily temperature, heart rate, blood pressure, and the like. The A/D converter 12 samples the detected bodily information and converts it into digital data at a sampling clock cycle from the system controller 10. The GPS receiver 13 is an apparatus mounted on an ordinary cellular telephone having the known navigation function and receives a radio wave transmitted from the GPS satellite via an antenna 14, thereby detecting the current position (latitude and longitude) of the wrist band sensor 1.

The BT transmission/reception device 15 is composed of, for example, an LSI (large-scale integration), and has the short-distance radio communication function based on the Bluetooth, and has the function for data communication with the other BT apparatuses (such as a car computer, a cellular phone, and a personal computer) via the antenna 16. More specifically, the BT transmission/reception device 15 as the master apparatus, for example, upon recognition of a slave apparatus existing in radius of 10 meters, exchanges ID numbers with it, and after this generates a random number to generate a link key (cipher key) between the master and slave apparatuses (hereinafter, referred to as "inquiry operation") . Thus, the wrist band sensor 1 is connected to the BT apparatus by radio communication and various data are transmitted and received (hereinafter, referred to as "paging operation"). This data transmission/reception is performed by the BT transmission/reception device 15 so as to be frequency-converted, for example, to perform frequency hopping 1600 times per second on 79 channels divided into 1 MHz (2.402 GHz to 2.480 GHz) on packet basis.

Moreover, once the inquiry operation is performed and a link key is generated, subsequent connections can start the paging operation according to the link key without performing the inquiry operation. It should be noted that in the present embodiment, explanation will be given on the assumption that once inquiry operation is performed, the subsequent connection starts the paging operation without performing the inquiry operation.

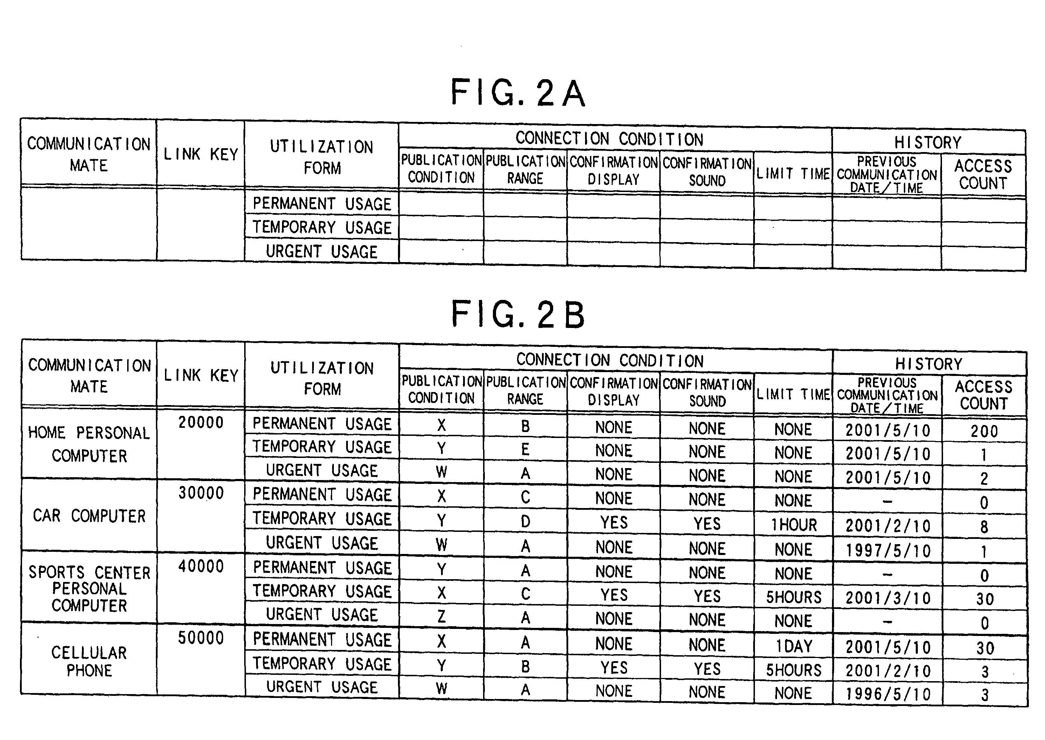

The system controller 10 as a setting device, upon such inquiry operation, sets a connection condition with the BT apparatus of the communication mate based on an operation instruction entered via the display/operation device 18 by a user. FIG. 2A shows a format of a table showing connection conditions and history set for one BT apparatus (hereinafter, referred to "connection condition table"). FIG. 2B shows the connection condition table after the conditions have been set. As shown in FIG. 2B, this connection condition table exists for each BT apparatus as a communication mate whose link key has been generated and is stored in the non-volatile memory 21 which will be detailed later.

As shown in FIG. 2A, the connection condition includes a publication condition, a publication range, a confirmation display, a confirmation sound, and a limit time. Here, the publication condition represents utilization forms with BT apparatus of the communication mate: permanent usage, temporary usage, and urgent usage. Among them, one of the permanent usage and the temporary usage should be set to a normal (main) use as a normally used form and the other to a sub use. That is, the permanent usage or the temporary usage is set to the normal usage. In FIG. 2B, the one set to the normal use is indicated by "X", and the one set to the sub use is indicated by "Y" . The urgent usage is used for an urgent external communication but this function may not be used depending on the BT apparatus of the communication mate. In the example of FIG. 2B, BT apparatus that can use the urgent usage is indicated by "W", and the BT apparatus that cannot use the urgent usage is indicated by "Z". Moreover, for each of the usage forms, it is possible to set the publication range, the confirmation display, the confirmation sound, and the limit time. Usage of these functions will be detailed later.

It should be noted that Bluetooth has a so-called temporary use function for data communication with the other BT apparatus by using a predetermined inherent key without using a link key. However, this function is different from the temporary usage of the present embodiment.

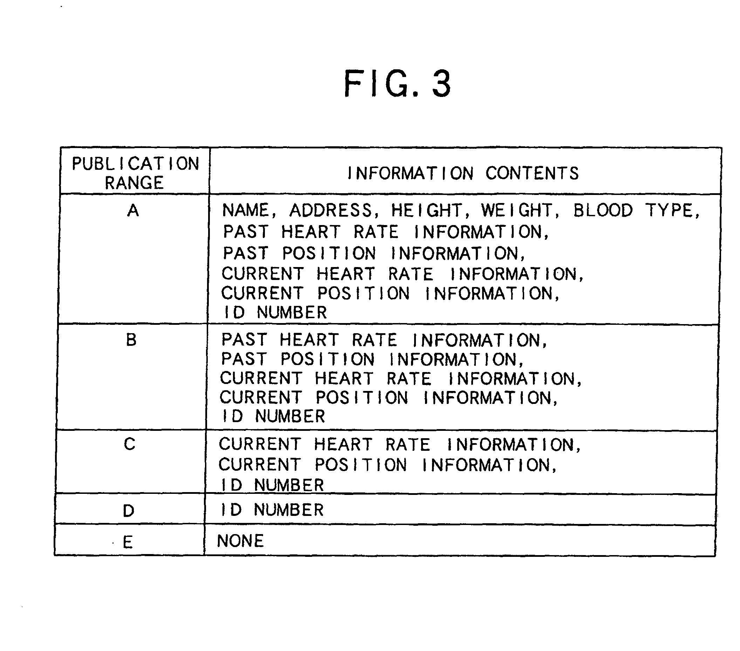

The publication range shown in FIG. 2A and FIG. 2B represents a range of information that can be transmitted to the communication mate and is classified in a plurality of ranks depending on the information content. FIG. 3 shows correspondence between the publication range ranks and the information contents. As shown in FIG. 3 there are five ranks "A" to "E" for the publication range and information items are classified into these five ranks . For example, when a BT apparatus is set to the publication range "C", the wrist band sensor 1 can transmit only the "current heart rate", "current position information", and "ID number" to that BT apparatus. A user can assign each of the information items to a desirable rank ("A" to "E"), for example, using a personal computer 2 at home and transfer the setting to the wrist band sensor 1. It should be noted that in the present embodiment, the publication range is classified into five ranks "A" to "E". However, the range may be classified more than five or less than five ranks. Moreover, FIG. 3 is only an example of information items and other information items can be assigned to the respective ranks.

The confirmation display and the confirmation sound in FIG. 2A and FIG. 2B can be set to "yes" or " none". For example, when the confirmation display is set to " yes" and an information item of a certain rank decided by the publication range is transmitted, the display/operation device 18 displays a warning message for check. Moreover, when the confirmation sound is set to "yes" and an information item classified to a certain rank decided by the publication range is transmitted, the speaker 20 reproduces a warning sound for check. Thus, the user can recognize whether a certain information item has been transmitted. This can prevent information leak while the user does not recognize.

The limit time shown in FIG. 2A and FIG. 2B represents a connection time between the wrist band sensor 1 and the BT apparatus of the communication mate. When this time has elapsed, the connection is automatically released.

The history on the connection condition table shown in FIG. 2A and FIG. 2B represents a previous communication date and time and access count and as shown in FIG. 2B, the history is present for each of the utilization forms.

Based on the connection condition table thus set, the system controller 10 controls data transmission between the BT transmission/reception device 15 and a BT apparatus, warning message display on the display/operation device 18 via the interface 17 and warning sound output via the amplifier 19 to the speaker 20.

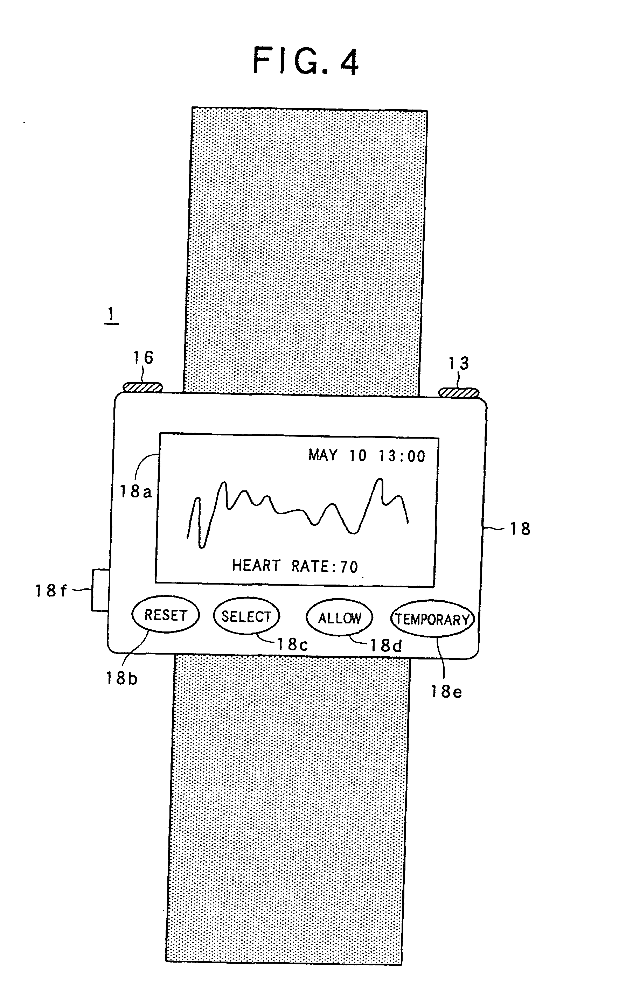

Next, the display/operation device 18 includes a display for displaying various information items and various operation buttons for a user to enter operation instructions. FIG. 4 shows an external view of the wrist band sensor 1 with the display/operation device 18 shown at the front. In the example of FIG. 4, the display 18a shows a current time and bodily information of the user. When setting a connection condition, the connection condition to be set is displayed on this display 18a. Moreover, a reset button 18b is used to clear the connection condition and the like. With this reset button 18b, it is possible to rapidly cancel information transmission, which improves safety.

A select button 18c is used to select a desired item (the publication condition, the publication range) when setting or updating the aforementioned connection condition.

An allow button 18d is used to allow connection with the BT apparatus of the communication mate and allow connection conditions. A temporary button 18e is used to switch (modify) to temporary usage when the publication condition is set to the permanent usage. Moreover, a reference symbol 18f in FIG. 4 denotes an urgent button used to enter an urgent usage instruction in the publication condition.

It should be noted that it is also possible to provide other operation buttons than these operation buttons, so that ranking ("A" to "E") of the publication range (ranking according to information contents) can be assigned by the buttons. Moreover, it is also possible to constitute the apparatus, so that combinations of these operation buttons can perform ranking for the respective information contents.

Next, the non-volatile memory 21 is, for example, an EEPROM (electrically erasable and programmable read only memory) containing: bodily information detected by the sensor 11 and converted to digital data by the A/D converter 12, position information detected by the GPS receiver 13, furthermore, user's personal information such as name, address, height, weight, and blood type, and the connection condition table. Moreover, personal information, bodily information, and position information are classified in the publication range ranks as shown in FIG. 3.

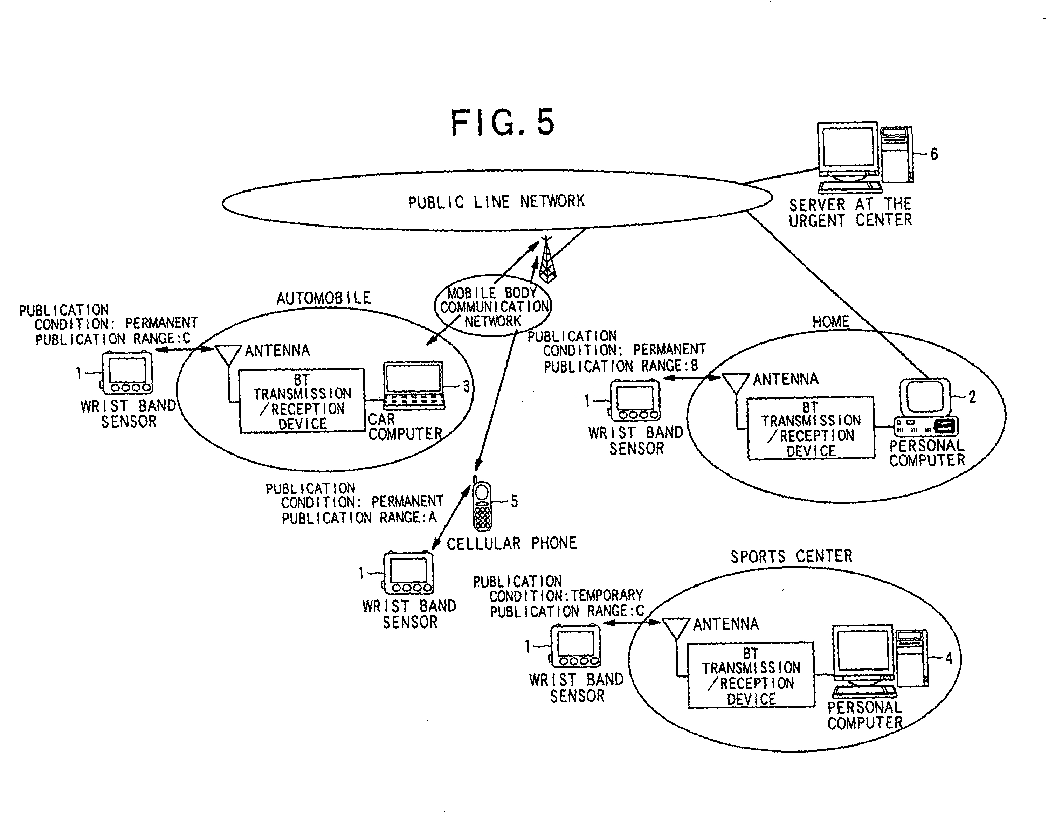

In the aforementioned configuration, the wrist band sensor 1 is connected to BT apparatus of the communication mate by radio waves and data communication is performed as will be explained below with reference to FIG. 5 to FIG. 10. FIG. 5 shows the wrist band sensor 1 communicating with various BT apparatuses. In the example of FIG. 5, as the BT apparatus of communication mate of the wrist band sensor 1, there are shown a home personal computer (including BT transmission/reception device and an antenna) 2, a car computer (including BT transmission/reception device and an antenna) 3 such as a car navigator in an automobile, a personal computer (including BT transmission/reception device and an antenna) 4 at a sports center, a cellular phone (including BT transmission/reception device and an antenna) 5.

Among these communication mates, the home personal computer is connected to a network such as Internet utilizing a public network and data communication can be performed with a server 6 of an urgent center of hospital or the like. Moreover, the car computer 3 and the cellular phone 5 are connected via a mobile communication network to a public line network and they can perform data communication with the server 6 of the urgent center. On the other hand, the personal computer 4 in the sports center is not directly connected to the server 6 of the urgent center.

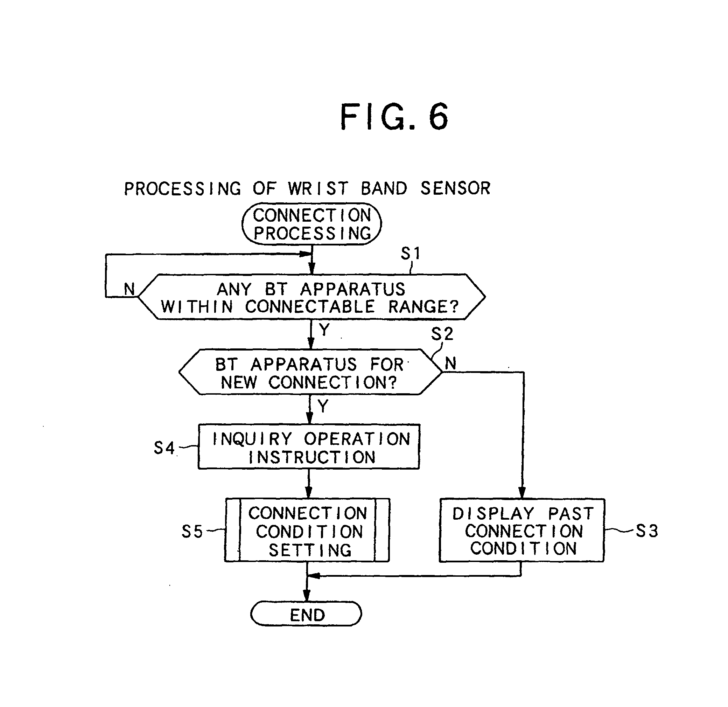

The wrist band sensor 1 performs radio communication with these BT apparatuses. FIG. 6 is a flowchart showing connection processing of the system controller 10 of the wrist band sensor 1 during radio communication.

Firstly, explanation will be given on a case when the wrist band sensor 1 communicates with the car computer 3. When the wrist band sensor 1 enters a communicable range with the car computer 3 (for example, within a radius of 10 meters), the BT transmission/reception device 15 recognizes the car computer 3, fetches the ID number of the car computer 3, and transmits it to the system controller 10.

Thus, the system controller 10 confirms that the car computer 3 as a BT apparatus exists in the communicable range (step S1). According to the ID number, the system controller 10 checks whether the car computer 3 of the communication mate existing in the communicable range is a new BT apparatus to be connected, i.e., whether a link key has been already generated (step S2). When a link key is already generated, the system controller 10 transmits to the BT transmission/reception device 15 an instruction to start paging operation according to the link key and referencing the connection condition table, causes the display 18a of the display/operation device 18 to display the connection condition (step S3). Thus, connection between the wrist band sensor 1 and the car computer 3 is established.

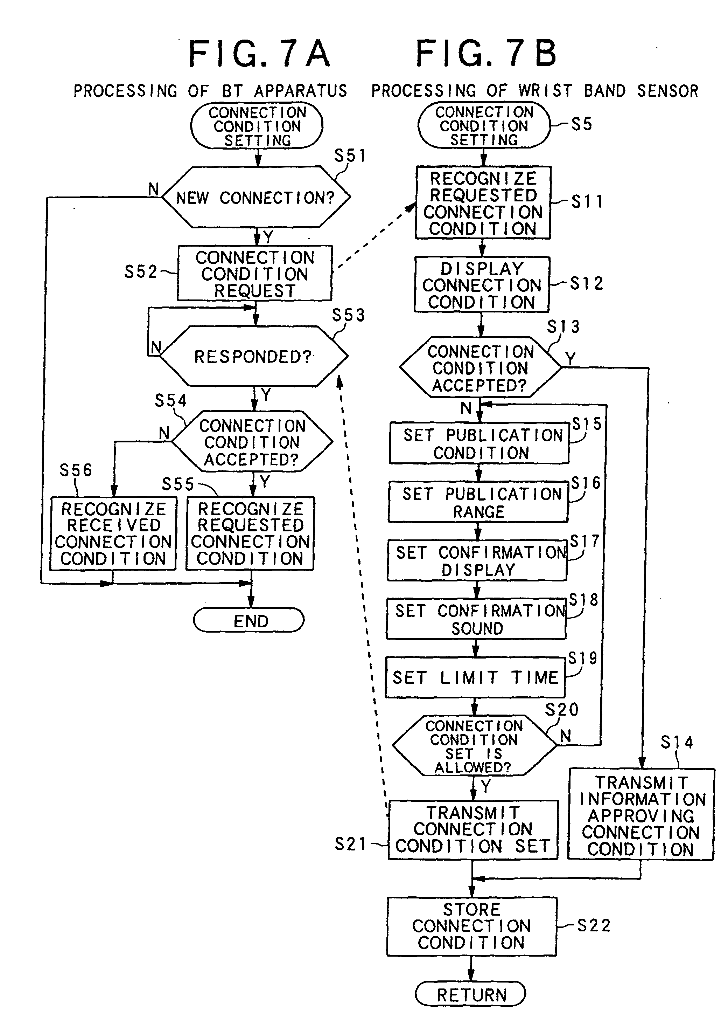

On the other hand, when no link key is present, the system controller 10 transmits an instruction of inquiry operation to the BT transmission/reception device 15 (step S4). Thus, in the BT transmission/reception device 15, a link key is generated with the car computer 3 and transmitted to the system controller 10. The system controller 10 starts connection condition setting processing with the car computer 3 (step S5). FIG. 7B is a flowchart showing the connection condition setting processing in step S5 of FIG. 6, while FIG. 7A is a flowchart showing a connection condition setting processing in the BT apparatus (the car computer 3 in this case). It should be noted that in FIG. 7A and FIG. 7B, broken lines indicate data flow between the wrist band sensor 1 and the BT apparatus.

In FIG. 7A, the car computer 3 also recognizes the wrist band sensor 1 and checks whether the BT apparatus is of a new connection (step S51). If it is determined to be a new connection, the car computer 3 requests the wrist band sensor 1 a connection condition (radio transmission) (step S52). This connection condition is predetermined at the car computer side 3. For example, in the publication condition, the permanent usage is set to the main use and the urgent usage can be utilized (as shown in FIG. 5, the car computer 3 can be connected to the server 6 of an urgent center via the mobile body communication network and the public line network).

Next, when the connection condition is received by the BT transmission/reception device 15 of the wrist band sensor 1, as shown in FIG. 7B, the system controller 10 recognizes this (step S11) and causes the display/operation device 18 to display the connection condition (step S12). It should b e noted that among the connection conditions, as for the confirmation display, the confirmation sound, the limit time, representative examples are stored in the non-volatile memory 21 of the wrist band sensor 1 side and these information items are read out and displayed on the display/operation device 18.

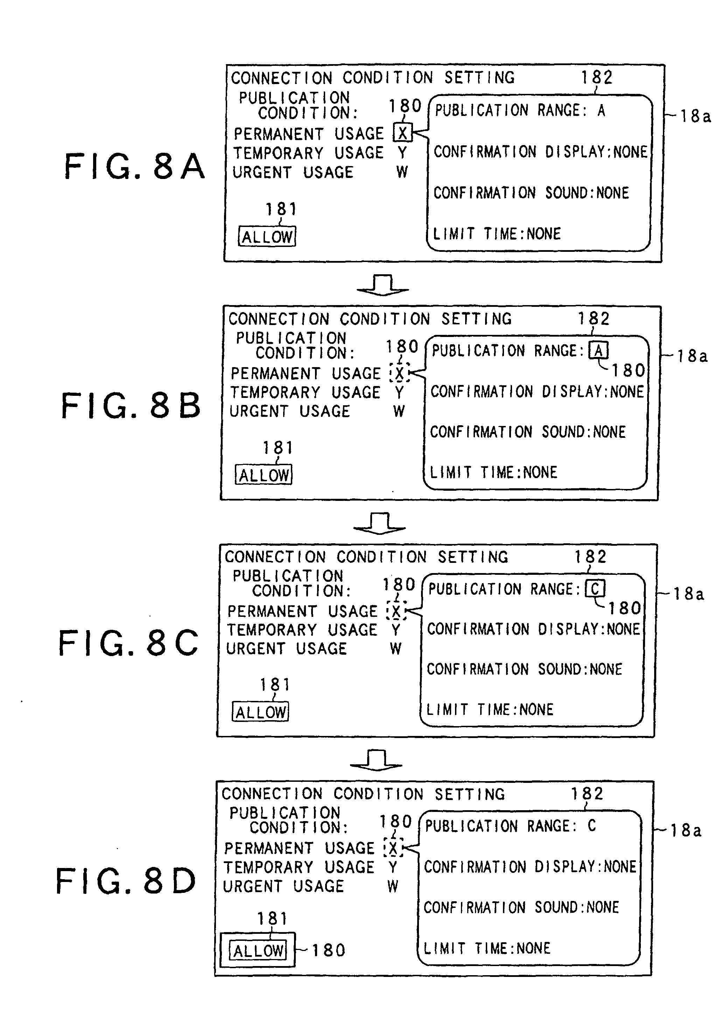

FIG. 8A shows the connection condition displayed on the display 18a of the display/operation device 18. When using the connection condition from the BT apparatus without any change, the user presses the allow button 18d of the display/operation device 18 in this display state. The system controller 10 recognizes that the connection condition has been accepted (step S13) and transmits to the BT transmission/reception device 15 an instruction to transmit that the connection condition is accepted (step S14). Thus, the information of acceptance is transmitted from the wrist band sensor 1 to the car computer 3.

On the other hand, when changing the connection condition from the BT apparatus, the user operates the select button 18c, the temporary button 18e, and the allow button 18d of the display/operation device 18. According to this operation, the system controller 10 modifies the publication condition, the publication range, the confirmation display, the confirmation sound, and the limit time (steps S15 to S19). Hereinafter, a specific example of setting modification will be explained.

In the example of FIG. 8A, as the publication condition, the permanent usage is set to "X"(main use) and the temporary usage is set to "Y" (sub use), and the urgent usage is set to "W" (i.e., can be utilized) . Among these, the "X" of the permanent usage is selected by a cursor 180, and the publication condition, confirmation display, confirmation sound, and limit time corresponding to the selected permanent usage are displayed in a display column 182. The cursor is moved successively from one set element to another when the select button 18c of the display/operation device 18 is pressed.

Moreover, in the example of 18A, when the "Y" of the temporary usage is selected by the cursor, the display column 182 displays the publication condition, confirmation display, confirmation sound, and limit time corresponding to the temporary usage. Furthermore, when the "W" of the urgent usage is selected by the cursor 180, the display column 182 displays the publication condition, confirmation display, confirmation sound, and limit time corresponding to the urgent usage.

Here, in the example of FIG. 8A, if the user wants to change the permanent usage to sub use, the user presses the temporary button 18e while the "X" at the right of the permanent usage is selected by the cursor 180. Then, the "X" is changed into the "Y" , i.e., modified to sub use. (In this case, the "Y" at the right of the temporary usage is automatically changed into the "X". Moreover, when the user does not want to use the urgent usage, the user presses the temporary button 18e while the "W" at right of the urgent usage is selected by the cursor 180. Then, the "W" is changed into the "Z". Thus, setting can be modified not to use the urgent usage.

Moreover, when the user presses the allow button 18d while the "X" at the right of the permanent usage is selected by the cursor 180, then as shown in FIG. 8B, the cursor 180 moves to a setting element "A" at the right of the publication range in the display column 182. When the temporary button 18e is pressed in this state, the setting element is changed from "A", to "B", to "C". For example, as shown in FIG. 8B and FIG. 8C, by pressing the temporary button 18e, the publication range setting element is changed from "A" to "C". Moreover, when modifying the confirmation display, confirmation sound, limit time setting elements, similarly, the user presses the select button 18c to move the cursor 180 between the setting elements and presses the temporary button 18e for modification.

When employing the modified contents as the connection condition, as shown in FIG. 8D, the user selects allow 181 by the select button 18c and presses the allow button 18d. Then the system controller 10 in response to this (step S20), transmits to the BT transmission/reception device 15 an instruction to transmit the connection condition which has been set (step S21). Thus, the set connection condition is transmitted from the wrist band sensor 1 to the car computer 3.

Next, in step S22, the system controller 10 stores the aforementioned connection condition with correspondence to the link key in the connection condition table in the non-volatile memory 21 (see FIG. 2B) and returns to the processing shown FIG. 6 to terminate the connection processing.

On the other hand, in the aforementioned step S14 or S21, if the connection condition or information is transmitted to the car computer 3, as shown in FIG. 7A, the car computer recognizes this as a response (step S53) and checks whether the connection condition requested in step S52 has been accepted (step S54). If the requested connection condition is accepted, the connection condition is recognized (stored in memory) (step S55). On the other hand, when the requested connection condition is not accepted, the connection condition received from the wrist band sensor 1 is recognized (stored in memory) (step S56).

It should be noted that, the connection condition thus set can be modified in various ways by the user by using various buttons on the display/operation device 18.

Thus, the connection processing in the wrist band sensor 1 is complete and the connection between the wrist band sensor 1 and the BT apparatus (car computer 3 in this example) is established, ready for starting data communication.

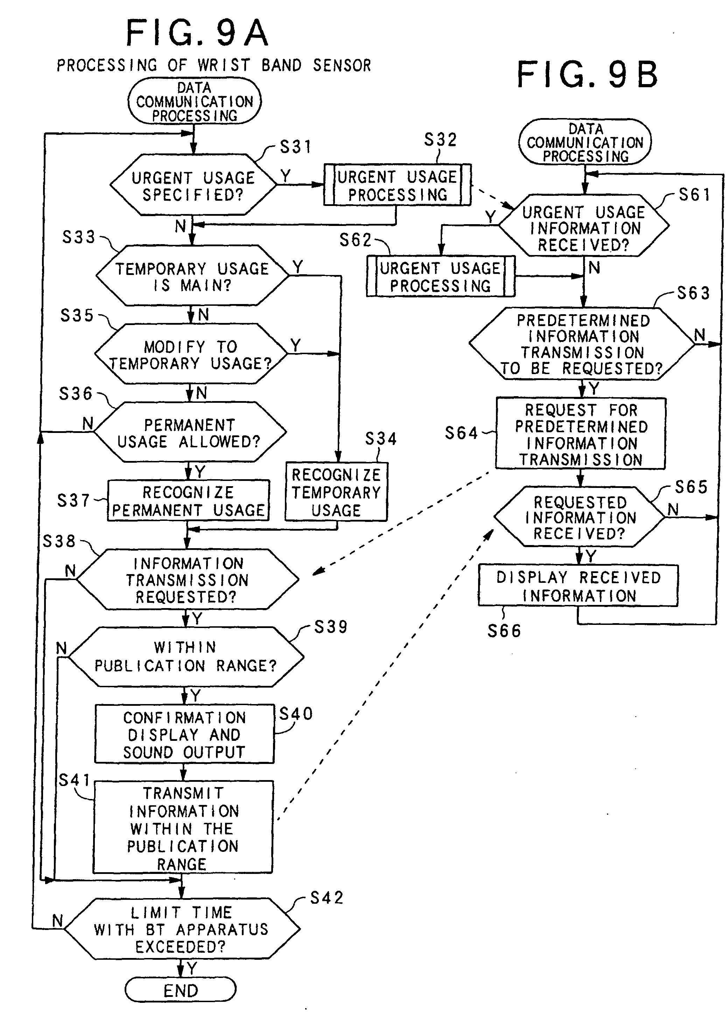

FIG. 9A is a flowchart showing a data communication processing of the system controller 10 of the wrist band sensor 1 and FIG. 9B is a flowchart showing a data communication processing of the BT apparatus (the car computer 3 in this case) for that time.

In the data communication processing shown in FIG. 9A, the system controller 10 monitors whether the urgent usage is specified (step S31). When the user presses the urgent button 18f on the display/operation device 18, in response to this, the system controller 10 starts an urgent usage processing (step S32). The urgent usage processing will be detailed later.

While no urgent usage is specified, the system controller 10 references the publication condition of the connection condition table stored in the non-volatile memory 21 and checks whether a normally used form (main use) is the temporary usage or not (step S33). If temporary usage, the system controller 10 recognizes this (step S34) and control is passed to step S38. On the other hand, if not temporary, control is passed to step S35. For example, the publication condition of the car computer shown in FIG. 2B, the permanent usage is set to main use. In this case, control is passed to step S35.

In step S35, the system controller 10 checks whether a modification instruction to the temporary usage is entered, i.e., whether the temporary button 18e has been pressed in the display/operation device 18. When the user presses the temporary button 18e in the display/operation block 18, the system controller 10 modifies the permanent usage to the temporary usage only during this connection. For example, the user is normally alone in his automobile and the information of his/her wrist band sensor 1 is transmitted to the car computer 3 to be displayed on the display screen. However, when another person is in the automobile, it is possible to limit the publication range of the information.

On the other hand, when no modification to the temporary usage is specified, the system controller 10 checks whether a permanent usage is specified (step S36). When the user presses the allow button 18d of the display/operation device 18, the system controller 10 recognizes the permanent usage (step S37) and control is passed to step S38. In the case of the permanent usage, unlike the temporary usage, control is passed to step S38 via the step S36 where the permanent usage is specified. This is because, the publication range of information is set wider in the permanent usage than in the temporary usage, and it is to prevent leak of the information unintentionally. However, it is also possible to constitute the system to skip the processing of step S36.

In step S38, the system controller 10 is monitoring whether a predetermined information transmission request is transmitted from the car computer 3. The car computer 3 performs such a predetermined information transmission request according to the data communication processing shown in FIG. 9B. In the data communication processing of the car computer 3 shown in FIG. 9B, firstly, the car computer 3 monitors whether information of the urgent usage has been received from the wrist band sensor 1 (step S61). If no information of the urgent usage has been received, it is determined whether to request transmission of predetermined information items (step S63). When requesting a transmission, a predetermined information transmission request is performed to the wrist band sensor 1 (step S64). Whether to perform such a predetermined information transmission request, and which information is requested to be transmitted are set in advance in the car computer 3.

Returning back to the explanation of FIG. 9A, when a predetermined information transmission request is received from the car computer 3, the system controller 10 references the publication range of the connection condition table stored in the non-volatile memory 21 and checks whether the requested information is within the publication range. For example, when the wrist band sensor 1 recognizes the permanent usage (step S37) and information corresponding to the publication range "A" or "B" is requested from the car computer 3, since the publication range on the connection condition table shown in FIG. 2B is set to "C", the system controller 10 determines that the information is out of the publication range and does not transmit the information requested.

On the other hand, for example, when the wrist band sensor 1 recognizes the permanent usage (step S37) and information contained in the publication range "C" is requested from the car computer 3, since the publication range on the connection condition table shown in FIG. 2B is set to "C", the system controller 10 determines that the information is within the publication range and control is passed to step S40.

In step S40, the system controller 10 performs display and sound output processing according to the confirmation display and confirmation sound corresponding to the utilization form in the connection condition table. For example, in the example of FIG. 2B, the confirmation display and the confirmation sound for the permanent usage of the car computer 3 are both set to "none". Accordingly, no message is displayed and no warning sound is output before control is passed to step S41.

In step S41, the system controller 10 gives to the BT transmission/reception device 15, a transmission instruction of the information requested from the car computer 3. Thus, the information is transmitted to the car computer 3.

Then, as shown in FIG. 9B, the car computer 3 receives the information (step S65) and displays the information on a display screen of the car computer 3 (step S66). For example, the display screen of the car computer 3 displays information of the publication range "C": "current heart rate information", "current position information", and "ID number". Thus, the user can confirm his/her body condition on the display screen of the car computer 3.

Moreover, the car computer 3 estimates the bodily condition (such as tension, fatigue, and sleepiness) of the user (driver) according to the current heart rate information and performs data analysis in combination with the automobile speed. The analysis result is output to the user by a sound or characters. For example, according to increase of the pulse rate (or heart rate) in combination of a continuous drive at a low speed (traffic snarl), an irritation is estimated. Moreover, according to lowering of the pulse rate (or heart rate) in combination with the excessive automobile speed (detected by automobile speed information), excitement/tension is estimated. Furthermore, according to lowering of the pulse rate (or heart rate) in combination with the meander of the automobile drive (detected by the automobile speed information), sleepiness is estimated. The car computer 3, based on these estimation results, retrieves a rest facility by navigation and outputs the results to the user (driver) in sound and characters.

Furthermore, the car computer 3, upon detection of increase of the heart rate when listening to a radio music, estimates that the music is a favorite one for the user. The car computer 3 saves the music and retrieves the title to present the user (driver). Moreover, the car computer 3 gives a quiz and questions in sound to the user (driver) and detects his/her bodily reaction, so that the reaction can be transmitted in sound.

By the way, in the aforementioned step S39, when the temporary usage is recognized by the wrist band sensor 1 (step S34), even if the publication range of the information requested from the car computer 3 is "C" shown in FIG. 3, since the publication range on the connection condition table shown in FIG. 2B is set to "D", the system controller 10 determeines that the information is out of the publication range and does not transmit the information requested.

On the other hand, if the car computer 3 requests information contained in the publication range "D" to the wrist band sensor 1 which has recognized the temporary usage, since the publication range on the connection condition table shown in FIG. 2B is set to "D", the system controller 10 determeines that the information is within the publication range and control is passed to step S40. In this case, in the example of FIG. 2B, the confirmation display and the confirmation sound for the temporary usage of the car computer 3 are set to "yes" . Accordingly, the system controller 10 causes the display/operation device 18 to display a warning message on the display 18a and a warning sound through the speaker 20. Moreover, in this case, only the ID number" is displayed on the display screen of the car computer 3. Thus, if another person is in the automobile, it is possible to prevent him/her from knowing user's current heart rate and other information. Moreover, a warning sound or a warning message can notify the user that it is not in the main use.

In step S42 shown in FIG. 9A, the system controller 10 checks whether the connection time with the car computer 3 exceeds a limit time corresponding to the current utilization form in the connection condition table (step S42) and terminates the data communication processing when the time exceeds the predetermined limit. On the other hand, when the limit time is set to "none" or the time does not exceed the limit time, control is passed back to step S31 to repeat the aforementioned processing. It should be noted that upon completion of data communication processing or at other timing, as shown in FIG. 2B, the history (date and time of the communication with the BT apparatus, access count, and the like) is updated in the non-volatile memory 21.

Next, as has been described above, if the user presses the urgent button 18f of the display/operation device 18 in step S31 shown in FIG. 9A, the system controller 10 starts an urgent usage processing (step S32).

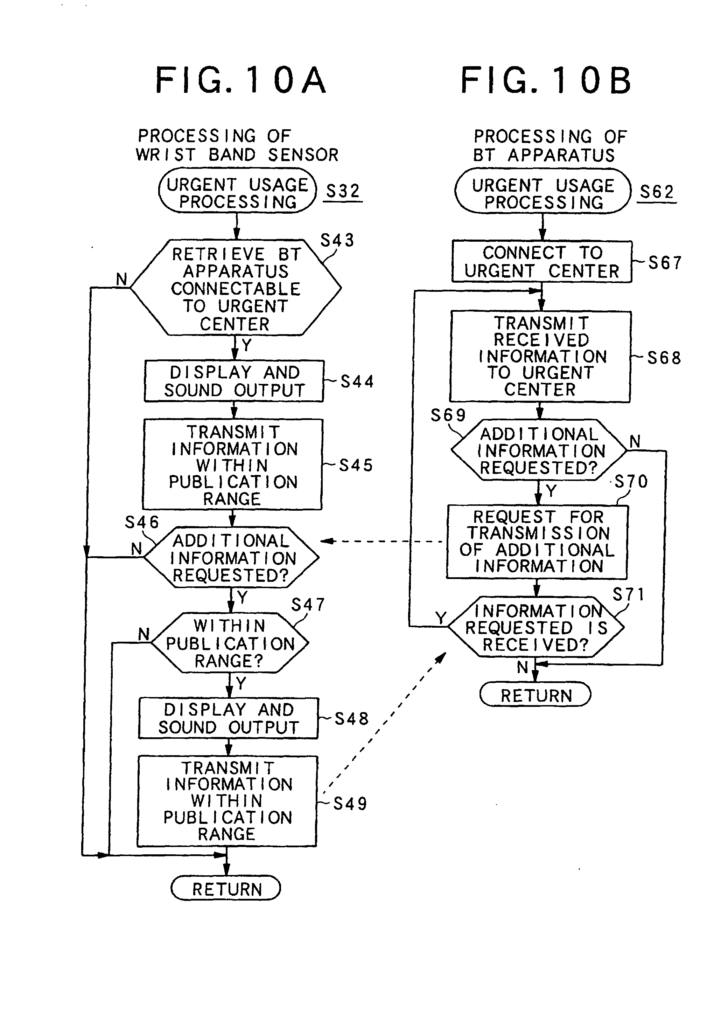

FIG. 10A is a flowchart showing an urgent usage processing in step S32 in FIG. 9A. FIG. 10B is a flowchart showing an urgent usage processing in step S62 in FIG. 9B.

In FIG. 10A, firstly, the system controller 10 references the connection condition table and retrieves a BT apparatus connectable to the urgent center (step S43). Here, the BT apparatuses to be retrieved are located within the communicable range with the wrist band sensor 1 and set to the urgent usage in the connection condition table. As a retrieval result, if a BT apparatus connectable to the urgent center is found, the system controller 10 selects the BT apparatus and performs display and sound output processing based on the confirmation display and confirmation sound corresponding to the warning usage in the connection condition table (step S44).

The system controller 10 gives to the BT transmission/reception device 15 an instruction to transmit information within the publication range corresponding to the urgent usage in the connection condition table. Thus, the information is transmitted to a selected BT apparatus. For example, if the selected BT apparatus is the car computer 3, information items of the publication range "A" set in the connection condition table shown in FIG. 2B are transmitted to the car computer 3.

When the car computer 3 has received the information of the publication range corresponding to the urgent usage, as has been explained with FIG. 9B, the car computer 3 recognizes this in step S61 and starts the urgent usage processing (step S62) shown in FIG. 10B.

In the processing of FIG. 10B, firstly, the car computer 3 is connected to the server 6 of the urgent center via the mobile communication network and the public line network. The car computer 3 transmits the information received from the wrist band sensor 1, to the server 6 of the urgent center (step S68). Next, the car computer 3, for example, monitors for a predetermined period of time and if the server 6 of the urgent center requests for additional information of the user, the car computer 3 requests the wrist band sensor 1 for transmitting additional information (step S70).

Returning back to explanation of FIG. 10A, in step S46, the system controller 10 of the wrist band sensor 1 monitors, for example, for a certain period of time, and if an additional information request is made from the car computer 3, the system controller 10 references the publication range corresponding to the urgent usage in the connection condition table and determines whether the additionally requested information is within the publication range (step S47). When the additionally requested information is determined to be within the publication range, the system controller 10 performs the display and sound output processing based on the confirmation display and confirmation sound corresponding to the urgent usage in the connection condition table (step S48) and gives to the BT transmission/reception device 15 an instruction to transmit the information additionally requested (step S49). Thus, the additional information is transmitted to the car computer 3.

Thus, as shown in step S71 in FIG. 10B, the car computer 3 receives the additional information from the wrist band sensor, performs the processes of steps S69 and S70 in the same way as has been mentioned above, and transmits the additional information to the server 6 of the urgent center.

Thus, when the urgent button 18f of the display/operation device 18 of the wrist band sensor 1 is pressed, independently of the permanent usage or the temporary usage, the information items of the publication range are rapidly transmitted to the urgent center. For example, the user suddenly feels very bad, he/she can rapidly notify that to an urgent center such as a hospital.

It should be noted that it is possible to set a minimum information (such as ID number alone) to be transmitted in step S45 and after that if an additional information transmission is requested in step S46, it is possible to transmit the information items within the publication range set in the connection condition table, in steps S47 to S49.

On the other hand, in step S46 in FIG. 10A, or in step S69 in FIG. 10B, if no additional information is requested within a predetermined period of time, control is passed back to FIG, 9A and FIG. 9B, respectively.

Next, explanation will be given on a case that the wrist band sensor 1 communicates with the personal computer 4 in the sports center.

In this case also, the system controller 10 of the wrist band sensor 1 performs the connection processing of FIG. 6 and the connection condition setting processing of FIG. 7 if a new connection with the personal computer 4 of the sports center in the same way as has been explained about the car computer 3. By the connection condition setting processing, for example, as shown in FIG. 2B, the publication condition is set in such that the temporary usage is main use, and the urgent usage is set not utilizable, and the publication range is set in such a manner that the temporary usage is set to "C". The urgent usage cannot be used because the personal computer 4 of the sports center cannot be connected to the server 6 of the urgent center. Accordingly, the "Z" is displayed on the display 18a of the display/operation device 18 in step S12 in FIG 7B, and the "Z" cannot be changed to the "W".

Next, the data communication processing shown in FIG. 9A is started. For example, when the user presses the urgent button 18f of the display/operation device 18, the system controller 10 responds to this (step S31) and as has been described above, starts the urgent usage processing (step S32) shown in FIG. 10A. Inn FIG. 10A, the system controller 10 retrieves in step S43 a BT apparatus connectable to the urgent center as has been described above. In this case, since the personal computer 4 of the sports center is not used for urgent usage and is not selected. However, other BT apparatuses, for example, when the cellular phone 5 shown in FIG. 5 is in a connected state, the cellular phone 5 is selected and the process of step S44 and after are performed in the same way as in the car computer 3.

Next, returning back to the explanation of FIG. 9A, in step S33, the system controller 10 references the publication condition of the connection condition table and checks whether the main use is the temporary usage or not. In the case of the personal computer 4 of the sports center, as shown in FIG. 2B, since the publication condition is set in such a manner that the main use is set to temporary usage, processing is performed in step S34 and after and the system controller 10 recognizes the temporary usage. It should be noted that in step S35, if the main use is permanent usage, it is possible to change it to temporary usage. It is also possible to constitute the system in such a way when the main use is temporary usage, it is possible to change it to permanent usage.

Next, when a predetermined information item is requested from the personal computer 4 of the sports center, the system controller 10 references the publication range of the connection condition table and determines whether the requested information item is within the publication range (step S39). In this case, when an information item corresponding to the publication range "A" or "B" shown in FIG. 3 is requested from the personal computer 4 of the sports center, since the publication range of the personal computer 4 of the sport center is set to "C" as shown in FIG. 2B, the system controller 10 determines that the information out of the publication range and does not transmit the requested information. On the other hand, when an information item contained in the publication range "C" shown in FIG. 3 is requested from the personal computer 4 of the sports center, the system controller 10 determines that the information is within the publication range and passes control to step S40. In this case, as shown in FIG. 2B, the confirmation display and confirmations sound are both set to "yes". Accordingly, the system controller 10 causes the display/operation device 18 to display a warning message on the display 18a and the speaker 20 to output a warning sound. After this, the information requested by the personal computer 4 of the sports center is transmitted.

Here, in the sports center, there are various tread mills (such as a walking machine) for testing physical load and these machines are connected to the personal computer 4 via a network such as LAN. When the user uses a tread-mill, with a predetermined operation, the current heart rate information transmitted to the personal computer 4 by the aforementioned data communication processing is transferred to the tread-mill, where the most appropriate load is calculated, so as to adjust the physical intensity.

It should be noted that the tread mill itself can have the Bluetooth communication function and perform radio communication with the wrist band sensor 1. In this case also, the processes in FIG. 6, FIG. 7, FIG. 9, and FIG 10 are performed in the same way as has been described above. It is possible to set a different connection condition, i.e., different publication condition and publication range for each of the tread mills.

Next, explanation will be given on a case when the wrist band sensor 1 performs radio communication with the home personal computer 2.

In this case also, in the same way as has been explained with the car computer 3, the system controller 10 of the wrist band sensor 1 performs the connection processing shown in FIG. 6 and if a new connection, the connection condition setting processing shown in FIG. 7, thereby establishing a connection with the home personal computer 2. It should be noted that In this case also, it is possible to perform the processes of FIG. 6, FIG. 7, FIG. 9, and FIG. 10. However, their overlapping explanation will be omitted.

The personal information stored in the non-volatile memory 21 of the wrist band sensor 1 may be created on the home personal computer 2 and can be transferred to the wrist band sensor 1 by radio data communication during data communication processing shown in FIG. 9A.

Moreover, as has been described above, on the home personal computer 2, it is possible to classify the information items into the five ranks ("A" to "E") and transfer them to the wrist band sensor 1 by radio data communication during data communication processing.

Furthermore, the home personal computer 2 can have the health check function. When the user comes back home, the user performs data communication processing to transmit the bodily information to the home personal computer 2 based on the publication range so as to perform automatic health check, results of which can be displayed on display screen of the personal computer 2. In this case, if a guest comes to this home, as has been described above, the user can press the temporary button 18e of the display/operation device 18 to modify for temporary usage. Thus, it is possible to prevent showing the health check result to the guest.

As described above, according to the illustrated embodiment, for each of the BT apparatuses, it is possible to set the connection condition such as the publication condition and the publication range, and based on this connection condition, it is possible to transmit information items according to the BT apparatus to be connected and according to the purpose. Thus it is possible to prevent transmission of unnecessary information items. Thus, it is possible to effectively prevent leak of privacy information. Moreover, the publication range is classified into a plurality of ranks according to the information contents and the user can assign the ranks for the respective information items. Thus, it is possible to effectively prevent transmission of unnecessary information items, thereby improving the benefits of the information communication apparatus.

It should be noted that an example of the wrist band sensor has been explained as the information communication apparatus of the present invention, but the present invention is not to be limited to this but may be applied to various apparatuses.

Moreover, in the aforementioned embodiment, the wrist band sensor has the GPS receiver 13 to detect the position information. Instead of that, it is also possible to constitute the system that position information detected by a cellular phone having the GPS receiver is transferred to the wrist band sensor.

Moreover, in the aforementioned embodiment, the Bluetooth method is used as the short distance radio communication method. However, the radio communication method is not limited to it and can be, for example, radio specification of 802.11b, IEEE 802. 11e realizing a wide band throughput or furthermore, a radio specification of diffusion type radio communication (transmission rate of 1 Gbps will be realized in a few years) which is called PulsON technology.

As has been described above, according to the present invention and the communication mate connected, it is possible to prevent transmission of unnecessary information, thereby preventing leak of privacy information. Moreover, the publication range is classified into a plurality of ranks and the user can assign the rank according to the information content at his/her will. This effectively prevents transmission of unnecessary information, thereby improving benefits off the information communication apparatus.

## Claims

1. An information communication apparatus (1) for data communication by a short distance radio communication method comprising:
a communication device (15) which is adapted to automatically recognize a communication mate existing in a communicable range, establish connection with it, and perform data communication with the communication mate;
a publication range setting device (10) which is adapted to set a publication range of information that can be transmitted, for each of the communication mates,
**characterised by**
a memory (21) which is adapted to store a connection condition table having a connection condition to perform the data communication;
a control device (10) which is adapted to control the data communication with the communication mate based on the connection condition set in the connection condition table when the data communication is performed;
wherein the connection condition includes a publication range of the information to be transmitted which is set for each of the communication mates; and
a determining device (10) used when a predetermined information transmission is requested from the communication mate connected, so as to determine whether to transmit the requested information based on the publication range set in the connection condition table.

2. The information communication apparatus (1) according to claim 1, further comprising an input device (18) for a user to enter an operation instruction, and
wherein the publication range setting device (10) is adapted to check whether the communication mate existing in the communicable range is a new apparatus to be connected and if so, the publication range is set based on a publication range setting instruction entered via the input device.

3. The information communication apparatus (1) according to claim 1, wherein the publication range setting device (10) is adapted to set the publication range for each of utilization forms in the data communication with the communication mate connected.

4. The information communication apparatus (1) according to claim 3, further comprising an input device (18) for a user to enter an operation instruction, and
wherein the publication range setting device (10) is adapted to check whether the communication mate existing in the communicable range is a new apparatus to be connected and if so, the publication range for each of the utilization forms is set based on a publication range setting instruction entered via the input device (18).

5. The information communication apparatus (1) according to claim 4, wherein the utilization forms include a permanent usage and a temporary usage; and
the publication range setting device (10) is adapted to set one of the permanent usage or the temporary usage as a normally used form based on an utilization form setting instruction entered via the input device (18).

6. The information communication apparatus (1) according to claim 5, wherein the publication range setting device (10) is adapted to modify the normally used form based on an utilization form modification instruction entered via the input device (18).

7. The information communication apparatus (1) according to claim 1, wherein the connection condition includes a publication range of the information to be transmitted to the communication mate.

8. The information communication apparatus (1) according to daim 1, wherein the connection condition includes an utilization form during data communication with the communication mate.

9. The information communication apparatus (1) according to claim 1, wherein the connection condition includes information to indicate notification or non-notification to the user of transmission of information for the communication mate.

10. The information communication apparatus (1) according to claim 1, wherein the connection condition includes a limit time for the data communication with the communication mate.

11. The information communication apparatus (1) according to claim 1, wherein in the connection condition table, the publication range is set for each of the utilization forms during data communication with the communication mate, and one of the utilization forms is set as a normally used form; and
when a predetermined information transmission is requested from the communication mate connected, the determining device is adapted to determine whether to transmit the information requested based on the publication range corresponding to the normally used form set in the connection condition table.

12. The information communication apparatus (1) according to claim 11, further comprising an input device (18) for a user to enter an operation instruction, wherein the utilization form includes an urgent usage; and
wherein the apparatus (1) comprises a transmission device (15) which is adapted to transmit information in the publication range corresponding to the urgent usage, to the communication mate based on an urgent usage instruction entered via the input device .

13. The information communication apparatus (1) according to claim 11, wherein the connection condition table includes notification or non-notification to the user of transmission of information of the publication range for each of the communication mates or each of the utilization forms; and
wherein the apparatus (1) comprises a notifying device (10) which is adapted to notify the user that the information in the publication range is transmitted when the determining device has determined to transmit the requested information, based on the connection condition table.

14. The information communication apparatus (1) according to any of claims 1 to 13, wherein the publication range is classified into a plurality of ranks according to information contents.

15. The information communication apparatus (1) according to claim 14, wherein information contents belonging to a predetermined rank of the publication range is set based on a ranking instruction entered via the input device.

16. An information communication method for data communication by a short distance radio communication method comprising:
automatically recognizing a communication mate existing in a communicable range, establishing connection with it, and performing data communication with the communication mate;
setting a publication range of the information that can be transmitted for each of the communication mates;
when a predetermined information transmission is requested from the communication mate connected determining whether to transmit the requested information based on the publication range
storing a connection condition table having a connection condition to perform the data communication;
controlling the data communication with the communication mate based on the connection condition set in the connection condition table when the data communication is performed;
wherein the connection condition includes a publication range of the information to be transmitted which is set for each of the communication mates; and
determining whether to transmit the requested information based on the publication range set in the connection condition table, when a predetermined information transmission is requested from the communication mate connected.

## Patentansprüche

1. Informationsübertragungsvorrichtung (1) für Datenübertragung mit einem Kurzstrekken-Funkübertragungsverfahren, die umfasst:
eine Übertragungsvorrichtung (15), die so eingerichtet ist, dass sie automatische eine Übertragungs-Gegenstelle erkennt, die in einem Übertragungsbereich vorhanden ist, Verbindung mit ihr herstellt und Datenübertragung mit der Übertragungs-Gegenstelle durchführt;
eine Veröffentlichungsbereich-Festlegeeinrichtung (10), die so eingerichtet ist, dass sie einen Veröffentlichungsbereich von Informationen, die gesendet werden können, für jeden der Übertragungspartner festlegt,
**gekennzeichnet durch**
einen Speicher (21), der so eingerichtet ist, dass er eine Verbindungsbedingungstabelle speichert, die eine Verbindungsbedingung zum Durchführen der Datenübertragung aufweist;
eine Steuereinrichtung (10), die so eingerichtet ist, dass sie die Datenübertragung mit dem Übertragungspartner auf Basis der Verbindungsbedingung steuert, die in der Verbindungsbedingungstabelle festgelegt ist, wenn die Datenübertragung durchgeführt wird;
wobei die Verbindungsbedingung einen Veröffentlichungsbereich der zu sendenden Informationen enthält, der für jeden der Übertragungspartner festgelegt ist; und
eine Bestimmungseinrichtung (10), die eingesetzt wird, wenn ein vorgegebener Informations-Sendevorgang von dem verbundenen Übertragungspartner angefordert wird, um so auf Basis des Veröffentlichungsbereiches, der in der Verbindungsbedingungstabelle festgelegt ist, zu bestimmen, ob die angeforderten Informationen gesendet werden.

2. Informationsübertragungsvorrichtung (1) nach Anspruch 1, die des Weiteren eine Eingabevorrichtung (18) für einen Benutzer zum Eingeben eines Operationsbefehls umfasst, und wobei die Veröffentlichungsbereich-Festlegeeinrichtung (10) so eingerichtet ist, dass sie prüft, ob der Übertragungspartner, der in dem Übertragungsbereich vorhanden ist, eine neue zu verbindende Vorrichtung ist, und, wenn dies der Fall ist, der Veröffentlichungsbereich auf Basis eines Veröffentlichungsbereichs-Festlegebefehls festgelegt wird, der über die Eingabeeinrichtung eingegeben wird.

3. Informationsübertragungsvorrichtung (1) nach Anspruch 1, wobei die Veröffentlichungsbereichs-Festlegeeinrichtung (10) so eingerichtet ist, dass sie den Veröffentlichungsbereich für alle Nutzungsformen in der Datenübertragung mit dem verbundenen Übertragungspartner einstellt.

4. Informationsübertragungsvorrichtung (1) nach Anspruch 3, die des Weiteren eine Eingabevorrichtung (18) für einen Benutzer zum Eingeben eines Operationsbefehls umfasst, und wobei die Veröffentlichungsbereich-Festlegeeinrichtung (10) so eingerichtet ist, dass sie prüft, ob der Übertragungspartner, der in dem Übertragungsbereich vorhanden ist, eine neue zu verbindende Vorrichtung ist, und wenn dies der Fall ist, der Veröffentlichungsbereich für jede der Nutzungsformen auf Basis eines Veröffentlichungsbereich-Festlegebefehls, der über die Eingabevorrichtung (18) eingegeben wird, eingestellt wird.

5. Informationsübertragungsvorrichtung (1) nach Anspruch 4, wobei die Nutzungsformen eine permanente Nutzung und eine zeitweilige Nutzung einschließen; und
die Veröffentlichungsbereich-Festlegeeinrichtung (10) so eingerichtet ist, dass sie die permanente Nutzung oder die zeitweilige Nutzung als eine normal verwendete Form auf Basis eines Nutzungsform-Festlegebefehls festlegt, der über die Eingabeeinrichtung (18) eingegeben wird.

6. Informationsübertragungsvorrichtung (1) nach Anspruch 5, wobei die Veröffentlichungsbereich-Festlegeeinrichtung (10) so eingerichtet ist, dass sie die normalerweise verwendete Form auf Basis eines Nutzungsform-Modifikationsbefehls modifiziert, der über die Eingabeeinrichtung (18) eingegeben wird.

7. Informationsübertragungsvorrichtung (1) nach Anspruch 1, wobei die Verbindungsbedingung einen Veröffentlichungsbereich der zu dem Übertragungspartner zu übertragenden Informationen einschließt.

8. Informationsübertragungsvorrichtung (1) nach Anspruch 1, wobei die Verbindungsbedingung eine Nutzungsform während der Datenübertragung mit dem Übertragungspartner einschließt.

9. Informationsübertragungsvorrichtung (1) nach Anspruch 1, wobei die Verbindungsbedingung Informationen einschließt, die Benachrichtigung oder Nicht-Benachrichtigung des Benutzers über das Senden von Informationen für den Übertragungspartner anzeigen.

10. Informationsübertragungsvorrichtung (1) nach Anspruch 1, wobei die Verbindungsbedingung eine Zeitgrenze für die Datenübertragung mit dem Übertragungspartner einschließt.

11. Informationsübertragungsvorrichtung (1) nach Anspruch 1, wobei in der Verbindungsbedingungstabelle der Veröffentlichungsbereich für jede der Nutzungsformen während Datenübertragung mit dem Übertragungspartner festgelegt wird und eine der Nutzungsformen als eine normalerweise verwendete Form festgelegt wird; und
wenn ein vorgegebener Informations-Sendevorgang von dem verbundenen Übertragungspartner angefordert wird, die Bestimmungseinrichtung so eingerichtet ist, dass sie auf Basis des Veröffentlichungsbereiches, der der normalerweise verwendeten Form entspricht, die in der Verbindungsbedingungstabelle eingestellt ist, bestimmt, ob die angeforderten Informationen übertragen werden.

12. Informationsübertragungsvorrichtung (1) nach Anspruch 11, die des Weiteren eine Eingabeeinrichtung (18) für einen Benutzer zum Eingeben eines Operationsbefehls umfasst, wobei die Nutzungsform eine dringende Benutzung einschließt; und
wobei die Vorrichtung (1) eine Sendeeinrichtung (15) umfasst, die so eingerichtet ist, dass sie Informationen in dem Veröffentlichungsbereich, der der dringenden Benutzung entspricht, auf Basis eines Befehls zur dringenden Benutzung, der über die Eingabeeinrichtung eingegeben wird, zu dem Übertragungspartner überträgt.

13. Informationsübertragungsvorrichtung (1) nach Anspruch 11, wobei die Verbindungsbedingungstabelle Benachrichtigung oder Nicht-Benachrichtigung des Benutzers der Übertragung von Information über den Veröffentlichungsbereichsbereich für jeden der Übertragungspartner oder jede der Nutzungsformen enthält; und
wobei die Vorrichtung (1) eine Benachrichtigungseinrichtung (10) umfasst, die so eingerichtet ist, dass sie den Benutzer benachrichtigt, dass die Informationen in dem Veröffentlichungsbereich gesendet werden, wenn die Bestimmungseinrichtung auf Basis der Verbindungsbedingungstabelle bestimmt hat, dass die angeforderten Informationen gesendet werden.

14. Informationsübertragungsvorrichtung (1) nach einem der Ansprüche 1 bis 13, wobei der Veröffentlichungsbereich entsprechend Informationsinhalten in eine Vielzahl von Stufen unterteilt ist.

15. Informationsübertragungsvorrichtung (1) nach Anspruch 14, wobei der Informationsinhalt, der zu einer vorgegebenen Stufe des Veröffentlichungsbereiches gehört, auf Basis eines Einstufungsbefehls eingestellt wird, der über die Eingabeeinrichtung eingegeben wird.

16. Informationsübertragungsverfahren für Datenübertragung mit einem Kurzstrecken-Funkübertragungsverfahren, das umfasst:
automatisches Erkennen eines Übertragungspartners, der in einem Übertragungsbereich vorhanden ist, Herstellen von Verbindung mit ihm und Durchführen von Datenübertragung mit dem Übertragungspartner;
Festlegen eines Veröffentlichungsbereiches der Informationen, die für jeden der Übertragungspartner gesendet werden können;
wenn ein vorgegebener Informations-Sendevorgang von dem verbundenen Übertragungspartner angefordert wird, auf Basis des Veröffentlichungsbereiches Bestimmen, ob die angeforderten Informationen übertragen werden;
Speichern einer Verbindungsbedingungstabelle mit einer Verbindungsbedingung zum Durchführen der Datenübertragung;
Steuern der Datenübertragung mit dem Übertragungspartner auf Basis des Verbindungszustandes, der in der Verbindungszustandtabelle festgelegt ist, wenn die Datenübertragung durchgeführt wird;
wobei die Verbindungsbedingung einen Veröffentlichungsbereich der zu übertragenden Informationen einschließt, der für jeden der Übertragungspartner festgelegt ist; und
auf Basis des in der Verbindungsbedingungstabelle festgelegten Veröffentlichungsbereiches Bestimmen, ob die angeforderten Informationen gesendet werden, wenn ein vorgegebener Informationssendevorgang von dem verbundenen Übertragungspartner angefordert wird.

## Revendications

1. Appareil de communication d'informations (1) destiné à la communication de données par un procédé de communication radio à courte distance comprenant :
un dispositif de communication (15) qui est adapté pour reconnaître automatiquement un correspondant de communication existant dans une plage communicable, établir une connexion avec lui, et effectuer une communication de données avec le correspondant de communication ;
un dispositif d'établissement de plage de publication (10) qui est adapté pour établir une plage de publication d'informations qui peuvent être transmises, pour chacun des correspondants de communication,
**caractérisé par**
une mémoire (21) qui est adaptée pour stocker un tableau d'état de connexion ayant un état de connexion pour effectuer la communication de données ;
un dispositif de commande (10) qui est adapté pour commander la communication de données avec le correspondant de communication sur la base de l'état de connexion établi dans le tableau d'état de connexion lorsque la communication de données est effectuée ;
dans lequel l'état de connexion comprend une plage de publication des informations à transmettre qui est établie pour chacun des correspondants de communication ; et
un dispositif de détermination (10) utilisé lorsqu'une transmission d'informations prédéterminées est demandée depuis le correspondant de communication connecté, de façon à déterminer si on transmet les informations demandées sur la base de la plage de publication établie dans le tableau d'état de connexion.

2. Appareil de communication d'informations (1) selon la revendication 1, comprenant en outre un dispositif d'entrée (18) pour qu'un utilisateur entre un ordre d'opération, et dans lequel le dispositif d'établissement de plage de publication (10) est adapté pour vérifier si le correspondant de communication existant dans la plage communicable est un nouvel appareil à connecter et si c'est le cas, la plage de publication est établie sur la base d'un ordre d'établissement de plage de publication saisi via le dispositif d'entrée.

3. Appareil de communication d'informations (1) selon la revendication 1, dans lequel le dispositif d'établissement de plage de publication (10) est adapté pour établir la plage de publication pour chacune des formes d'utilisation dans la communication de données avec le correspondant de communication connecté.

4. Appareil de communication d'informations (1) selon la revendication 3, comprenant en outre un dispositif d'entrée (18) pour qu'un utilisateur entre un ordre d'opération, et
dans lequel le dispositif d'établissement de plage de publication (10) est adapté pour vérifier si le correspondant de communication existant dans la plage de communication est un nouvel appareil à connecter et si c'est le cas, la plage de publication pour chacune des formes d'utilisation est établie sur la base d'un ordre d'établissement de plage de publication saisi via le dispositif d'entrée (18).

5. Appareil de communication d'informations (1) selon la revendication 4, dans lequel les formes d'utilisation comprennent un usage permanent et un usage temporaire ; et
le dispositif d'établissement de plage de publication (10) est adapté pour établir l'usage permanent ou l'usage temporaire en tant que forme normalement utilisée sur la base d'un ordre d'établissement de forme d'utilisation saisi via le dispositif d'entrée (18).

6. Appareil de communication d'informations (1) selon la revendication 5, dans lequel le dispositif d'établissement de plage de publication (10) est adapté pour modifier la forme normalement utilisée sur la base d'un ordre de modification de forme d'utilisation saisi via le dispositif d'entrée (18).

7. Appareil de communication d'informations (1) selon la revendication 1, dans lequel l'état de connexion comprend une plage de publication des informations à transmettre au correspondant de communication.

8. Appareil de communication d'informations (1) selon la revendication 1, dans lequel l'état de connexion comprend une forme d'utilisation pendant la communication de données au correspondant de communication.

9. Appareil de communication d'informations (1) selon la revendication 1, dans lequel l'état de connexion comprend des informations pour indiquer une notification ou une non notification à l'utilisateur de transmission d'informations pour le correspondant de communication.

10. Appareil de communication d'informations (1) selon la revendication 1, dans lequel l'état de connexion comprend un temps limite pour la communication de données avec le correspondant de communication.

11. Appareil de communication d'informations (1) selon la revendication 1, dans lequel dans le tableau d'état de connexion, la plage de publication est établie pour chacune des formes d'utilisation pendant la communication de données avec le correspondant de communication, et l'une des formes d'utilisation est établie comme forme normalement utilisée ; et
lorsqu'une transmission d'informations prédéterminées est demandée depuis le correspondant de communication connecté, le dispositif de détermination est adapté pour déterminer si on transmet les informations demandées sur la base de la plage de publication correspondant à la forme normalement utilisée établie dans le tableau d'état de connexion.

12. Appareil de communication d'informations (1) selon la revendication 11, comprenant en outre un dispositif d'entrée (18) pour qu'un utilisateur entre un ordre d'opération, dans lequel la forme d'utilisation comprend un usage urgent ; et
dans lequel l'appareil (1) comprend un dispositif de transmission (15) qui est adapté pour transmettre des informations dans la plage de publication correspondant à l'usage urgent, au correspondant de communication sur la base d'un ordre d'usage urgent saisi via le dispositif d'entrée.

13. Appareil de communication d'informations (1) selon la revendication 11, dans lequel le tableau d'état de connexion comprend une notification ou une non notification à l'utilisateur de transmission d'informations de la plage de publication pour chacun des correspondants de communication ou chacune des formes d'utilisation ; et
dans lequel l'appareil (1) comprend un dispositif de notification (10) qui est adapté pour notifier à l'utilisateur que les informations dans la plage de publication sont transmises lorsque le dispositif de détermination a déterminé la transmission des informations demandées, sur la base du tableau d'état de connexion.

14. Appareil de communication d'informations (1) selon l'une quelconque des revendications 1 à 13, dans lequel la plage de publication est classée en une pluralité de rangs selon le contenu des informations.

15. Appareil de communication d'informations (1) selon la revendication 14, dans lequel le contenu des informations appartenant à un rang prédéterminé de la plage de publication est établi sur la base d'un ordre de classement saisi via le dispositif d'entrée.

16. Procédé de communication d'informations pour une communication de données par un procédé de communication radio à courte distance comprenant :
la reconnaissance automatique d'un correspondant de communication existant dans une plage communicable, l'établissement d'une connexion avec lui et la réalisation d'une communication de données avec le correspondant de communication,
l'établissement d'une plage de publication des informations qui peuvent être transmises pour chacun des correspondants de communication ;
lorsqu'une transmission d'informations prédéterminées est demandée depuis le correspondant de communication connecté, le fait de déterminer si on transmet les informations demandées sur la base de la plage de publication ;
le stockage d'un tableau d'état de connexion ayant un état de connexion pour effectuer la communication de données ;
la commande de la communication de données avec le correspondant de communication sur la base de l'état de connexion établi dans le tableau d'état de connexion lorsque la communication de données est effectuée ;
dans lequel l'état de connexion comprend une plage de publication des informations à transmettre qui est établie pour chacun des correspondants de communication ; et
le fait de déterminer si on transmet les informations demandées sur la base de la plage de publication établie dans le tableau d'état de connexion, lorsqu'une transmission d'informations prédéterminées est demandée depuis le correspondant de communication connecté.
